# EUROPÄISCHE PATENTSCHRIFT

(11) **EP 1 247 442 B1**
(45) Veröffentlichungstag und Bekanntmachung des Hinweises auf die Patenterteilung: **02.11.2005**
(21) Anmeldenummer: 02006314.5
(22) Anmeldetag: 21.03.2002
(51) Int. Cl.: A01F 12/18

(54) **Segmentiertes Arbeitsorgan einer landwirtschaftlichen Arbeitsmaschine**
Segmented working member of an agricultural machine
Organe de travail segmenté d'une machine agricole

(30) Priorität: 04.04.2001 DE 10116754
(43) Veröffentlichungstag der Anmeldung: 09.10.2002
(73) Patentinhaber: CLAAS Selbstfahrende Erntemaschinen GmbH, 33428 Harsewinkel (DE)
(72) Erfinder: Holtmann, Bernd, 48324 Sendenhorst (DE); Dammann, Martin, 33428 Harsewinkel (DE); Speckamp, Dirk, 59227 Ahlen (DE)

(56) Entgegenhaltungen:
- EP-A- 0 516 893
- DE-B- 1 137 599
- FR-A- 1 186 097
- US-A- 3 101 721
- US-A- 5 024 631
- US-A- 5 190 497

## Beschreibung

Die Erfindung betrifft eine landwirtschaftliche Arbeitsmaschine zum Aufnehmen, Bearbeiten und Weiterleiten von Erntegut gemäß dem Oberbegriff des Anspruchs 1.

Eine gattungsgemäße, als Mähdrescher ausgeführte landwirtschaftliche Erntemaschine wird unter anderem in der europäischen Patentschrift EP 0 468 160 offenbart. Über einen Schrägförderer wird das in nicht näher dargestellter Weise geerntete Gut einem Dreschwerk zugeführt, welches von einer ersten Dreschtrommel und einer dieser ersten Dreschtrommel im rückwärtigen Bereich zugeordneten weiteren Dreschtrommel gebildet wird. Untenseitig sind den Dreschtrommeln diese wenigstens teilweise umschlingende Dresch- und Abscheidekörbe zugeordnet, die zwischen sich und der jeweiligen Dreschtrommel einen Durchgangsspalt ausbilden. Aufgrund der Drehbewegung der Dreschtrommeln wird das von dem Schrägförderer zugeführte und von den als Schlagleisten ausgeführten Mitnahmeelementen der Dreschtrommeln erfasste Erntegut durch diesen Spalt gefördert, wobei durch die Schlagwirkung der Schlagleisten im Bereich der Dresch- und Abscheidekörbe ein Herauslösen der Körner aus den Fruchtständen und wenigstens ein teilweises Abscheiden dieser herausgelösten Körner an den Dresch- und Abscheidekörben erfolgt.

Aufgrund der hohen mechanischen Belastung während dieses Druschvorganges unterliegen vor allem die Dresch- und Abscheidekörbe sowie die als Schlagleisten ausgeführten Mitnahmeelemente der Dreschtrommeln einem erhöhten Verschleiß, der mitunter dazu führt, dass zumindest die Dresch- und Abscheidekörbe verschleißbedingt ausgewechselt werden müssen. Um außerdem den Druschvorgang besser an verschiedene Erntegutarten anpassen zu können, sind bei derartigen landwirtschaftlichen Arbeitsmaschinen die siebartig gestalteten Beläge der Dresch- und Abscheidekörbe austauschbar mit dem jeweiligen Rahmen der Dresch- und Abscheidekörbe verbunden. Auf diese Weise wird es möglich die die Siebbeläge der Dresch- und Abscheidekörbe durchsetzenden Öffnungen besser an die Größe der abzuscheidenden körnigen Erntegüter anzupassen.

Um nun bei einer nach der EP 0 468 160 ausgeführten landwirtschaftlichen Erntemaschine einen Austausch der Dresch- und Abscheidekörbe oder auch der Dreschtrommeln vornehmen zu können, ist es notwendig, zumindest den Schrägförderer zu demontieren, damit die Dresch- und Trennorgane durch den zuvor vom Schrägförderer verschlossenen frontseitigen Bereich des Mähdreschers herausgenommen und wieder eingesetzt werden können. Ein derartiger Wechsel der Dresch- und Trennorgane hat vor allem den Nachteil, dass ein hoher Umbau- und Montageaufwand betrieben werden muss.

Um den Nachteil des erhöhten Umbau- und Montageaufwandes zu minimieren, offenbart unter anderem die deutsche Patentanmeldung DE 199 26 365 eine Dreschwerksausführung für einen Mähdrescher, deren, die Dreschtrommel wenigstens teilweise umschlingender Dresch- und Abscheidekorb in Achsrichtung der Dreschtrommel mehrteilig ausgeführt ist, sodass die Segmente des Dresch- und Abscheidekorbes ausgewechselt werden können, ohne dass der dem Dreschwerk vorgeordnete Schrägförderer demontiert werden muss. Um auch bei geringem Freiraum zwischen Schrägförderer und Dreschtrommel Dresch- und Abscheidekorbsegmente, die einen den Druschprozess und die Abscheidung begünstigenden großen Umschlingungswinkel realisieren, austauschen zu können, ohne den Schrägförderer zu demontieren, wird in der DE 199 26 365 zudem eine Ausführung offenbart, in der der Dresch- und Abscheidekorb segmentiert ausgeführt ist und jedes Segment von zwei Teilsegmenten gebildet wird, die mittels Scharnier miteinander verbunden sind.

Eine derartige Ausführung des Dresch- und Abscheidekorbes ermöglicht es auch bei geringem Demontagefreiraum, wie dies zwischen Schrägförderer und Dreschwerk der Fall ist, eine Demontage der Dresch- und Abscheidekorbsegmente zu ermöglichen, ohne dass der Schrägförderer vom Mähdrescher abgenommen werden muss. Dies führt jedoch zu konstruktiv aufwendigen Abscheidekorbsegmenten. Problematisch würde der Austausch mehrteilig ausgeführter Dresch- und Abscheidekörbe zudem dann, wenn das Dreschwerk als Mehrtrommeldreschwerk ausgeführt ist und mehrere der Dreschtrommeln wenigstens teilweise von segmentierten Dresch- und Abscheidekörben umschlungen werden. Vorallem zwischen benachbarten Dreschtrommeln ist der Abstand mitunter zu gering, um durch diesen hindurch Montage- oder Demontagearbeiten an den Trommeln selbst oder den ihnen zugeordneten Dresch- und Abscheidekörben durchführen zu können. Sowohl für ein- als auch mehrtrommelig ausgeführte Dreschwerke ist die Verletzungsgefahr für die die Montagearbeiten vornehmende Person hoch, da sie wenigstens teilweise zwischen Abscheidekorb und Dreschtrommel hineingreifen muss.

Der Erfindung liegt deshalb die Aufgabe zugrunde, die Arbeitsorgane einer landwirtschaftlichen Arbeitsmaschine zum Aufnehmen, Bearbeiten und Fördern von Erntegut so weiterzubilden, dass mit geringem baulichen Aufwand und ohne erhöhtes Verletzungsrisiko der die Montage- und Demontagearbeiten durchführenden Personen eine Montage und Demontage von Arbeitsorganen oder Teilen hiervon möglich wird.

Erfindungsgemäß wird die Aufgabe durch eine landwirtschaftliche Erntemaschine zum Aufnehmen, Bearbeiten und Fördern von landwirtschaftlichem Erntegut mit den kennzeichnenden Merkmalen des Anspruchs 1.

Indem zumindest einem um eine Achse umlaufenden ersten Arbeitsorgan eine von einem lösbaren Segment freigebbare und verschließbare Montage- und Demontageöffnung angeformt ist, die an dem wenigstens einen ersten Arbeitsorgan einen Zugang zu dem wenigstens einen weiteren Arbeitsorgan ausbildet, wird erreicht, dass das wenigstens eine Arbeitsorgan über eine Montage- oder Demontageöffnung verfügt, durch die hindurch Arbeiten an benachbarten Arbeitsorganen mit geringem baulichen Aufwand und niedrigem Verletzungsrisiko für den Montierenden durchgeführt werden können.

Eine konstruktiv besonders einfach ausgeführte und für die montierende Person leicht zugängliche Weiterbildung der Erfindung ergibt sich dann, wenn sich das wenigstens eine lösbare Segment zumindest über einen Teilbereich der Länge des wenigstens einen umlaufenden Arbeitsorgans und zumindest über einen Teilbereich seines Querschnitts erstreckt.

Eine besonders einfache konstruktive Ausführung wird dann erreicht, wenn das wenigstens eine Arbeitsorgan trommelförmig ausgeführt ist und dass dem Arbeitsorgan angeformte wenigstens eine Segment als Trommelsegment ausgebildet ist.

In vorteilhafter Weiterbildung der Erfindung kann das wenigstens eine weitere Arbeitsorgan von Gutleitelementen gebildet werden, die das wenigstens eine erste Arbeitsorgan zumindest teilweise umschlingen und deshalb zu ihrer Montage oder Demontage schwer zugänglich wären, sodass die dem wenigstens einem ersten Arbeitsorgan angeformte Zugangsöffnung deren Aus- und Einbau begünstigt.

Um einerseits die Bearbeitung des Erntegutes zu erhöhen und zum Anderen eine größere Durchsatzleistung zu erzielen, kann in einer weiteren vorteilhaften Ausgestaltung der Erfindung dem wenigstens einen umlaufenden Arbeitsorgan wenigstens ein weiteres umlaufendes Arbeitsorgan zugeordnet sein.

Eine besonders vorteilhafte Weiterbildung der Erfindung ergibt sich dann, wenn das wenigstens eine erste Arbeitsorgan und wenigstens ein weiteres Arbeitsorgan als Dreschtrommeln ausgebildet sind und wenigstens teilweise von als Dresch- und Abscheidekorb ausgeführten Gutleitelementen umschlungen werden, wobei wenigstens einer der Dreschtrommeln das erfindungsgemäße Trommelsegment angeformt ist. Damit wird es möglich wenigstens einer Dreschtrommel eine Montage- und Demontageöffnung anzuformen durch die hindurch ein einfacher Zugang zu benachbarten Arbeitsorganen realisierbar ist, wobei auch aufgrund der verbesserten Zugänglichkeit die Verletzungsgefahr der montierenden Person erheblich verringert wird.

Eine besonders vorteilhafte Weiterbildung der Erfindung ergibt sich dann, wenn wenigstens ein umlaufendes Arbeitsorgan eines Mehrtrommeldreschwerks in erfindungsgemäßer Weise segmentiert ist, sodass wenigstens einem umlaufenden Arbeitsorgan eine Montage- und Demontageöffnung angeformt ist durch die hindurch der Zugang zu benachbarten Arbeitsorganen ohne großen Montageaufwand und mit niedrigem Verletzungsrisiko für die montierende Person möglich wird.

Um die Zugänglichkeit zu den benachbarten Arbeitsorganen weiter zu verbessern, ist es von Vorteil, wenn das die Montage- und Demontageöffnung bildende Segment mittig, d.h. symmetrisch zur Mitte des jeweiligen Arbeitsorgans an diesem angeordnet ist.

Um nur die Zugänglichkeit zu bestimmten Teilbereichen der benachbarten Arbeitsorgane zuzulassen, können dem wenigstens einen umlaufenden Arbeitsorgan auch mehrere Segmente zugeordnet sein, sodass sich an diesem wenigstens einen umlaufenden Arbeitsorgan an verschiedenen Positionen Montage- und Demontageöffnungen ergeben. Dies ist vor allem dann von Nutzen, wenn bestimmte, ein hohes Verletzungsrisiko in sich birgende Bereiche bei räumlich begrenzten Montage- und Demontagearbeiten von der Zugänglichkeit ausgeschlossen werden sollen.

Damit die erfindungsgemäße Segmentierung des wenigstens einen umlaufenden Arbeitsorgans dessen Steifigkeit nicht verringert, sind dem wenigstens einen Arbeitsorgan im Übergangsbereich zwischen Arbeitsorgan und Segment und/oder im Bereich des wenigstens eine Segments Versteifungsstege zugeordnet, sodass das Arbeitsorgan auch weiterhin die hohen Belastungen bei der Bearbeitung des Erntegutes aufnehmen kann ohne sich zu verformen.

Um den Ein- und Ausbau des wenigstens einen Segments zu vereinfachen, können dem jeweiligen Arbeitsorgan im Übergangsbereich zwischen Arbeitsorgan und Segment und/oder im Bereich des Segmentes Befestigungsstege angeformt sein, die das jeweilige Segment mittels Schraubverbindungen lösbar aufnehmen und von der die Montagearbeiten durchführenden Person leicht zu erreichen sind.

Eine konstruktiv besonders einfache Gestaltung des lösbaren Segments ergibt sich dann, wenn das Segment von einem Mantelblech gebildet wird, sodass bei der Demontage nur das Mantelblech entfernt werden muss, um auf einfache Weise und mit niedrigem Verletzungsrisiko an benachbarte Arbeitsorgane zu gelangen.

In einer weiteren vorteilhaften Ausgestaltung der Erfindung können die als Dresch- und Abscheidekörbe ausgeführten Gutführungselemente in sich in Achsrichtung des zugeordneten Arbeitsorgans erstreckende Siebbelagabschnitte unterteilt sein, wobei das wenigstens eine Segment eine Montage- und Demontageöffnung ausbildet, deren Länge größer ist als die Länge des längsten Siebbelagabschnitts, sodass die Siebbeläge problemlos durch die von dem Segment gebildete Montage- und Demontageöffnung herausnehm- und einsetzbar sind.

Weitere vorteilhafte Ausgestaltungen sind Gegenstand weiterer Unteransprüche und werden nachfolgend an Hand von Zeichnungen näher erläutert.

Es zeigen:
- Figur 1: eine teilweise schematische Seitenansicht der erfindungsgemäßen landwirtschaftlichen Erntemaschine
- Figur 2: eine auszugsweise Vergrößerung der erfindungsgemäßen landwirtschaftlichen Erntemaschine nach Figur 1
- Figur: 3 eine Ansicht des erfindungsgemäßen Teilbereichs der landwirtschaftlichen Erntemaschine aus der Sichtebene der Linie IV-VI in Figur 2 ohne Darstellung der Vordreschtrommel
- Figur 4: eine Detailansicht der erfindungsgemäßen landwirtschaftlichen Erntemaschine entsprechend der Seitenansicht nach Figur 1 mit teilweise aufgelöster Darstellung der Siebbeläge

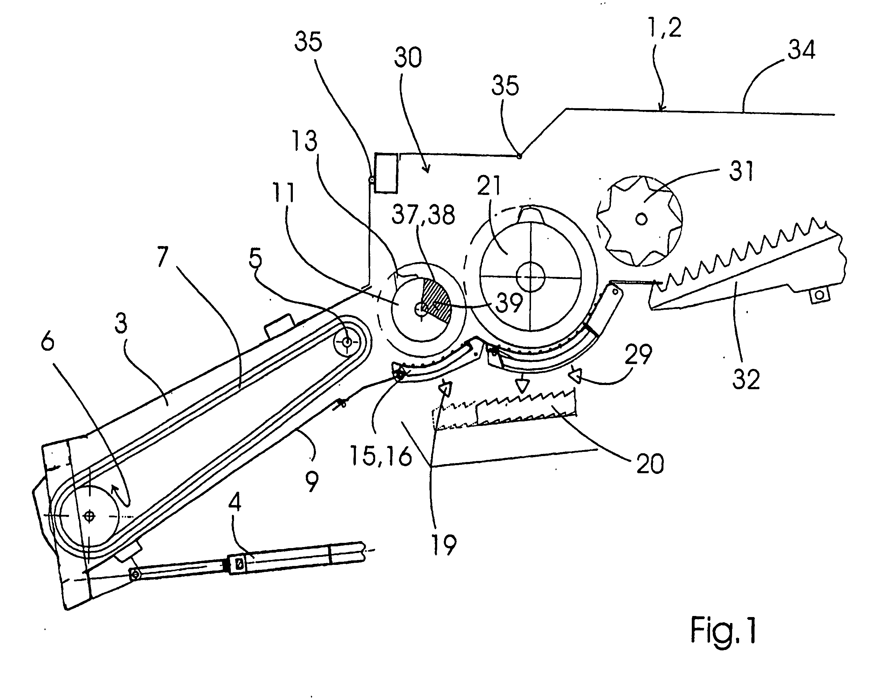

Figur 1 zeigt schematisch den frontseitigen Bereich einer als Mähdrescher 2 ausgeführten landwirtschaftlichen Erntemaschine 1, wobei dem Mähdrescher 2 zur Aufnahme eines nicht dargestellten Erntevorsatzes ein Schrägförderer 3 zugeordnet ist, der in an sich bekannter Weise mittels am Trägerfahrzeug 1,2 angeordneter Hubzylindern 4 um eine quer zur Fahrtrichtung FR des Mähdreschers 2 weisende Achse 5 schwenkbar an diesem angeordnet ist. Im dargestellten Ausführungsbeispiel nimmt der Schrägförderer 3 in seinem Inneren einen an sich bekannten gemäß Pfeilrichtung 6 umlaufenden Fördermechanismus 7 auf, der das dem Schrägförderer 3 frontseitig zugeführte Erntegut 8 zwischen dem Fördermechanismus 7 und der untenseitigen Verkleidung 9 des Schrägförderers 3 in dessen rückwärtigen Bereich einem als Vordreschtrommel 11 ausgeführten nachgeordneten Arbeitsorgan 10 zuführt. Die Vordreschtrommel 11 wird von einem Walzenmantel 12 gebildet, der an seinem Umfang eine beliebige Anzahl von Mitnahmeelementen 13 aufweist, wobei die Mitnahmeelemente 13 in an sich bekannter Weise leisten- oder paddelförmig ausgeführt sein können und sich zumindest teilweise über die in Achsrichtung 14 weisende Breite der Vordreschtrommel 11 erstrecken. Untenseitig umschlingt die Vordreschtrommel 11 wenigstens teilweise ein noch näher zu beschreibender in seiner Lage zur Vordreschtrommel veränderbarer Dresch- und Abscheidekorb 15, dem zugleich die Funktion eines Gutführungselementes 16 für den Gutstrom 8 zukommt. Der von den Mitnahmeelementen 13 der Vordreschtrommel 11 erfasste Erntegutstrom 8 wird in dem sich zwischen Vordreschtrommel 11 und Dresch- und Abscheidekorb 15 ausbildenden Förderspalt 17 so intensiv durch die sich gemäß Pfeilrichtung 18 drehenden Mitnahmeelemente 13 bearbeitet, dass ein zum überwiegenden Teil Körner beinhaltender Erntegutstrom 19 durch den Dresch- und Abscheidekorb 15 abgeschieden und nachfolgenden nicht näher beschriebenen Arbeitsorganen 20 zugeführt wird. Der Vordreschtrommel 11 ist in ihrem rückwärtigen Bereich eine weitere Dreschtrommel 21 nachgeordnet, die um eine quer zur Fahrtrichtung FR weisende Achse 22 gemäß Pfeilrichtung 23 antreibbar ist und an ihrem Umfang ebenfalls an sich bekannte Schlagleisten 24 von beliebiger Gestalt, Anzahl und Größe aufnimmt. Der im rückwärtigen Bereich der Vordreschtrommel 11 aus dem Förderspalt 17 heraustretende Gutstrom 8 wird von den als Schlagleisten 24 ausgeführten Mitnahmeelementen 25 der Dreschtrommel 21 erfasst und durch einen weiteren Durchgangsspalt 26, der untenseitig ebenfalls von einem Dresch- und Abscheidekorb 27 begrenzt wird gefördert, wobei dem Dresch- und Abscheidekorb 27 wiederum die Funktion von Gutleitelementen 28 für den Gutstrom 8 zukommt. Der weitere Dresch- und Abscheidekorb 27 ist so ausgeführt, dass er die ihm zugeordnete Dreschtrommel 21 wenigstens teilweise umschlingt. Beim Fördern des Gutstromes 8 durch den Durchgangsspalt 26 führt die schlagende Bearbeitung des Gutstromes 8 durch die Schlagleisten 24 der Dreschtrommel 21 dazu, dass ein weiterer im wesentlichen Körner beinhaltender Erntegutstrom 29 durch den Dresch- und Abscheidekorb 27 hindurch abgeschieden und weiteren ebenfalls nicht näher beschriebenen Arbeitsorganen 20 zugeführt wird. Es ist auch möglich, dass das dargestellte aus Vordreschtrommel 11 und Dreschtrommel 21 gebildete Dreschwerk 30 eine nicht dargestellte Vielzahl von beliebig gestalteten Dreschtrommel umfassen kann, um den zugeführten Erntegutstrom 8 zu bearbeiten. Im rückwärtigen Bereich kann dem Dreschwerk 30 ferner eine Wendetrommel 31 zugeordnet sein, die den aus dem Durchgangsspalt 26 heraustretenden Erntegutstrom 8 annimmt und so umlenkt, dass er störungsfrei einem nachgeordneten Arbeitsorgan, wie beispielsweise einem Hordenschüttler 32 zugeführt werden kann.

Obenseitig sind dem Dreschwerk 30 eine oder mehrere Zugangsklappen 33 zugeordnet, die lösbar zwischen dem Schrägförderer 3 und der Verkleidung 34 des Mähdreschers 2 eingepasst sind. In an sich bekannter Weise kann jede der Zugangsklappen 33 mittels Scharnieren 35 oder durch nicht näher dargestellte Schraubverbindungen mit der Verkleidung 34 des Mähdreschers 2 verbunden sein. Ein derart ausgeführter Mähdrescher 2 bildet somit eine landwirtschaftliche Arbeitsmaschine 1 zum Aufnehmen, Bearbeiten und Fördern von Erntegut 8, 19, 29 die ein erstes als Vordreschtrommel 11 und ein weiteres als Dreschtrommel 21 ausgeführtes Arbeitsorgan 10 aufnimmt, wobei beide Arbeitsorgane 11, 21 um eine quer zur Fahrtrichtung FR angeordnete Achse 14, 22 umlaufend antreibbar in der landwirtschaftlichen Arbeitsmaschine 1 gelagert sind, wobei die umlaufenden Arbeitsorgane 11, 21 untenseitig wenigstens teilweise von weiteren als Dresch- und Abscheidekörbe 15, 27 ausgeführten Arbeitsorganen umschlungen werden.

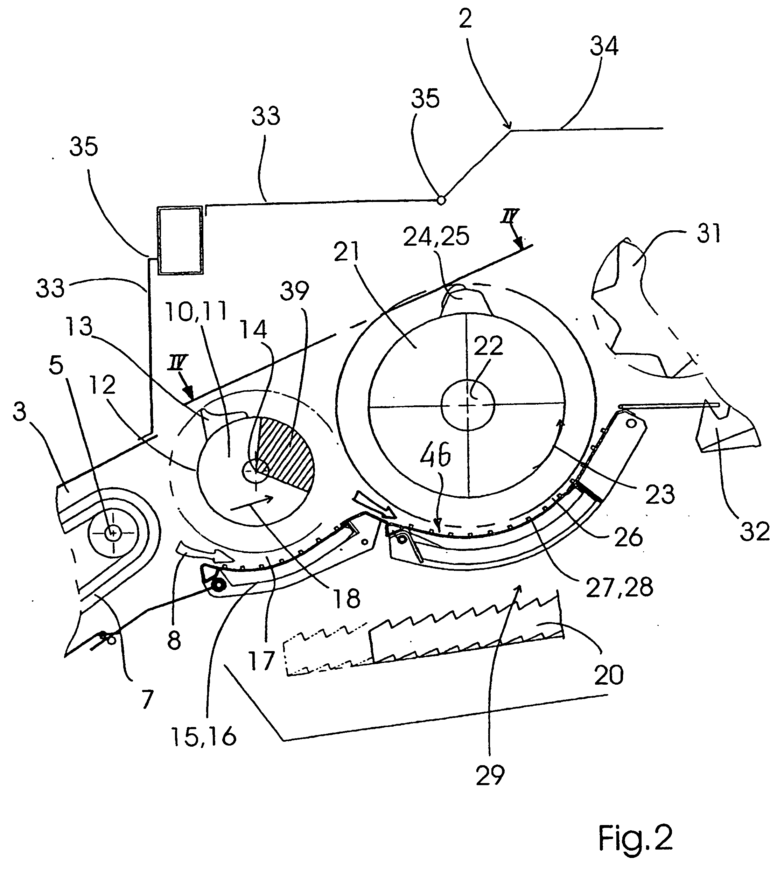

Gemäß den Figuren 1 und 2 verfügt die Vordreschtrommel 11 über einen zylindrischen Walzenmantel 12 dem umfangsseitig die beliebig ausgeführten Mitnahmeelemente 13 zugeordnet sind. Erfindungsgemäß ist dem Walzenmantel 12 eine Aussparung 36 angeformt, die im einfachsten Fall durch ein als schalenförmiges Mantelblech 37 ausgeführtes Verschlusselement 38 abdeckbar ist, wobei das demontierbare Mantelblech 37 ein lösbar an der Vordreschtrommel 11 angeordnetes Segment 39 bildet (schraffierte Fläche in Figur 1, 2). Bei demontiertem Mantelblech 37 bildet die Montage- und Demontageöffnung 40 an der Vordreschtrommel 11 einen Zugang 41 aus, über den die der Vordreschtrommel 11 zugeordneten weiteren Arbeitsorgane 15, 21, 27 für Montage- und Demontagezwecke auf einfache Weise und mit niedrigem Verletzungsrisiko für die montierende Person zugänglich sind.

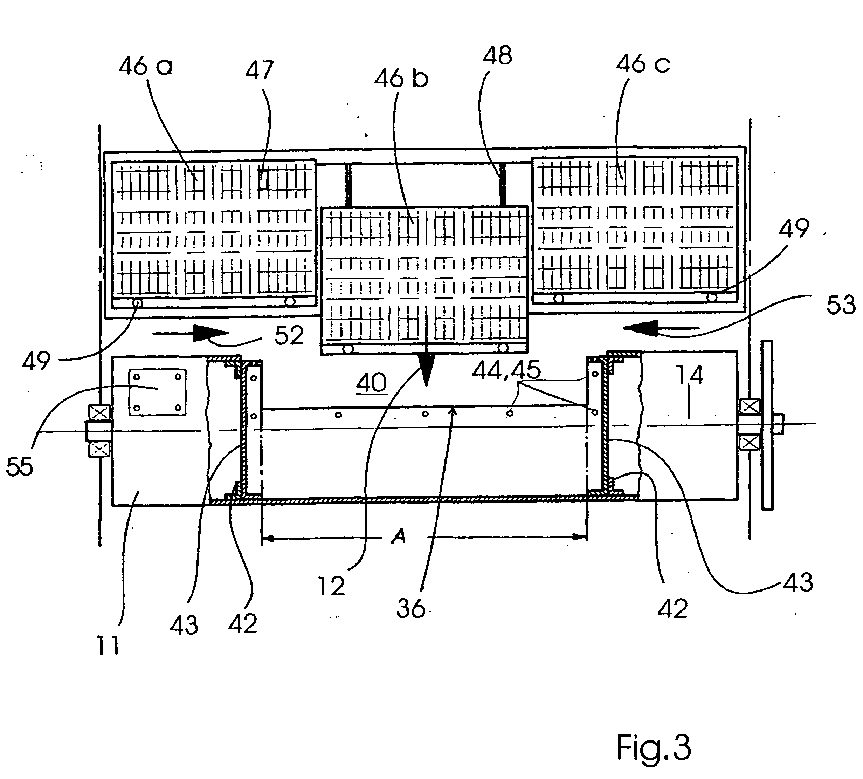

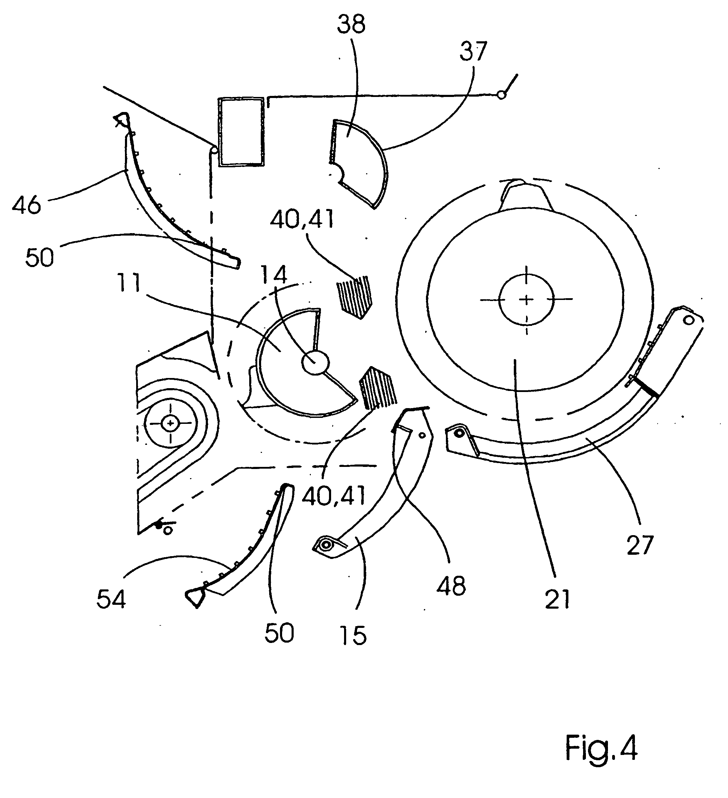

Gemäß der Figuren 3 und 4 erstreckt sich die der Vordreschtrommel 11 angeformte Montage- und Demontageöffnung 40 zumindest über einen Teilbereich A der Länge der Vordreschtrommel 11 entlang der Achse 14 der Vordreschtrommel 11 und zumindest über einen Teilbereich 39 des Querschnitts der Vordreschtrommel 11.

Im Bereich des demontierbaren Mantelblechs 37 sind der Vordreschtrommel 11 ringförmige Versteifungsstege 42 im einfachsten Fall eingeschweißt, die ihrerseits mit ebenfalls im Inneren der Vordreschwalze 11 angeordneten ringförmigen Befestigungsstegen 43 in Wirkverbindung stehen, sodass einerseits die Vordreschwalze 11 auch im Bereich des demontierbaren Mantelblechs 37 die erforderliche Steifigkeit aufweist und zum Anderen das Mantelblech 37 auf einfache Weise am Walzenmantel 12 der Vordreschtrommel 11 befestigt werden kann. Im einfachsten Fall werden die Befestigungsstege 43 von einer Vielzahl von Gewindebohrungen 44 durchsetzt, sodass das Mantelblech 37 auf die Befestigungsstege 43 mittels nicht näher dargestellter Schrauben 45 aufschraubbar ist. Es liegt im Rahmen der Erfindung, dass neben den im Übergangsbereich zwischen Walzenmantel 12 und Mantelblech 37 angeordneten Versteifungsstegen 42 und Befestigungsstegen 43 weitere derartige Versteifungs- und Befestigungsstege 42, 43 im Bereich des demontierbaren Mantelblechs 37 angeordnet sein können, die abweichend vom dargestellten Ausführungsbeispiel sich nicht über den gesamten Umfang der Vordreschtrommel 11 erstrecken, da in erfindungsgemäßer Weise im Bereich des demontierbaren Mantelblechs 37 eine Montage- und Demontageöffnung 40 ausgebildet werden soll.

Indem der Vordreschtrommel 11 in erfindungsgemäßer Weise ein demontierbares Segment 39 in Form des demontierbaren Mantelblechs 37 zugeordnet ist, wird es möglich nach entfernter oder verschwenkter Zugangsklappe 33 das Mantelblech 37 von der Vordreschtrommel 11 zu demontieren, sodass sich zwischen der Vordreschtrommel 11 und der nachgeordneten Dreschtrommel 21 der erfindungsgemäße Zugangsbereich 41 zu den benachbarten Arbeitsorganen 15, 21, 27 ergibt. Damit wird es möglich Montage- und Demontagearbeiten im Bereich des Dreschwerkes 30 durchzuführen, die einerseits die Verletzungsgefahr des Montierenden erheblich reduzieren und zum Anderen ist zu deren Durchführung eine Demontage des Schrägförderers 3 nicht mehr erforderlich.

In an sich bekannter Weise verfügen die Dresch- und Abscheidekörbe 15, 27 über Siebbeläge 46, die wie in Figur 3 dargestellt in einzelne Siebbelagabschnitte 46a-c unterteil oder einstückig ausgeführt sein können, die in Abhängigkeit von dem zu erntenden Gut unterschiedlich große Durchtrittsöffnungen 47 aufweisen müssen, sodass gutartabhängig und zum Teil auch verschleißabhängig deren Austausch erfolgen muss. Damit ein Austausch der Siebbeläge 46 überhaupt möglich wird sind die Siebbeläge 46 so im Rahmen 48 des jeweiligen Dresch- und Abscheidekorbes 15, 27 eingesetzt, dass sie zumindest einenends durch Schraubverbindungen 49 mit dem jeweiligen Rahmen 48 lösbar verbunden sind, während sie anderenends im einfachsten Fall mittels hackenförmig abgewinkelter Stege 50 in nicht dargestellten schlitzförmigen Öffnungen der Rahmen 48 der Dresch- und Abscheidekörbe 15, 27 eingehangen werden. Im Falle eines einstückig ausgeführten Siebbelags 46 müsste sich die der Vordreschtrommel 11 angeformte Montage- und Demontageöffnung 40 in nicht dargestellter Weise über eine Länge quer zur Fahrtrichtung FR und entlang der Achse 14 der Vordreschtrommel 11 erstrecken, die größer als die Breite des einstückig ausgeführten Siebbelags 46 des jeweiligen Dresch- und Abscheidekorbes 15, 27 ist.

Ist der Siebbelag 46a-c gemäß Figur 4 mehrteilig ausgeführt, so muss die Montage- und Demontageöffnung 40 zumindest so breit sein, dass der breiteste der Siebbelagabschnitte 46a-c durch die Montage- und Demontageöffnung 40 hindurchbewegbar ist, und wenigstens ein Siebbelagabschnitt 46a-c in eingebautem Zustand vollständig innerhalb der Breite der Montage- und Demontageöffnung 40 liegt. Auf diese Weise wird es möglich, dass alle Siebbelagabschnitte 46a-c eines Dresch- und Abscheidekorbes 15, 27 durch die Montage- und Demontageöffnung 40 aus dem jeweiligen Dresch- und Abscheidekorb 15, 27 herausgenommen und wieder eingesetzt werden können, ohne dass der Schrägförderer 3 entfernt werden muss.

Gemäß Figur 3 kann zumindest der Dresch- und Abscheidekorb 15 der Vordreschtrommel 11 in seiner Lage zur Vordreschtrommel 11 veränderbar am nicht dargestellten Rahmen der landwirtschaftlichen Erntemaschine 1 angeordnet sein, sodass die ein- oder mehrteilig ausgeführten Siebbeläge 46, 46a-c der Dresch- und Abscheidekörbe 15, 27 der Vordreschtrommel 11 und der Dreschtrommel 21 an verschiedenen Stellen aus der landwirtschaftlichen Erntemaschine 1 herausgeführt oder eingesetzt werden können. Um auch bei einer derartigen Ausführung die erforderliche Montagefreiheit zu erhalten, muss die Vordreschtrommel 11 gemäß Figur 3 so verdreht werden, dass einerseits der oder die Siebbeläge 46, 46a-c der Dreschtrommel 21 obenseitig durch die geöffnete Zugangsklappe 33 bewegbar sind und andererseits der oder die Siebbeläge 46, 46a-c der Vordreschtrommel 11 untenseitig im Bereich des verschwenkbaren Dresch- und Abscheidekorbes 15 aus der landwirtschaftlichen Erntemaschine 1 heraus- oder einführbar sind.

Sind die Siebbeläge 46a-c gemäß Figur 4 von gleicher Breite so ergibt sich eine konstruktiv besonders einfache Ausführung dann, wenn die Montage- und Demontageöffnung 40 der Vordreschtrommel 11 mittig zugeordnet ist und die einzelnen Siebbeläge 46a-c in der Weise aus dem Dresch- und Abscheidekorb 27 herausnehmbar sind, dass zunächst der mittlere Siebbelag 46b demontiert und gemäß Pfeil 51 durch die Montage- und Demontageöffnung 40 und den von ihr gebildeten Zugang 41 herausgeführt wird. Hierauf werden die Schraubverbindungen 49 der verbleibenden Siebbeläge 46a, 46c gelöst und die Siebbeläge 46a,c nacheinander in den Bereich der Montage- und Demontageöffnung 40 auf dem Rahmen 48 des Dresch- und Abscheidekorbs 27 entsprechend der Pfeile 52, 53 verschoben, bevor sie durch den von der Montage- und Demontageöffnung 40 gebildeten Zugang 41 herausnehmbar sind. Der Einbau der Siebbeläge 46a-c muss dann in umgekehrter Reihenfolge zu der bezüglich des Demontierens beschriebenen Vorgehensweise erfolgen. Aufgrund des in seiner Lage zur Vordreschtrommel 11 veränderbaren Dresch- und Abscheidekorbs 15 kann der ein- oder mehrteilig ausgeführte Siebbelag 54 dieses Dresch- und Abscheidekorbes 15 ebenfalls ohne den frontseitig an der landwirtschaftlichen Erntemaschine 1 angeordneten Schrägförderer 3 abnehmen zu müssen, demontiert werden , in dem der Rahmen 48 des Dresch- und Abscheidekorbes 15 in eine von der Vordreschtrommel 11 entfernte Position verschwenkt wird. Zugleich wird die Vordreschtrommel 11 in eine Position verdreht, in der die ihr angeformte Montage- und Demontageöffnung 40 dem Dresch- und Abscheidekorb 15 zugewandt ist, sodass sich der erfindungsgemäße Zugang 41 in einem zwischen Vordreschtrommel 11 und Siebbelag 54 des der Vordreschtrommel 11 zugeordneten Dresch- und Abscheidekorbs 15 ergibt.

Um beispielsweise die der Vordreschtrommel 11 nachgeordnete Dreschtrommel 21 nur bereichsweise durch die erfindungsgemäße Montage- und Demontageöffnung 40 zugänglich zu machen, können der Vordreschtrommel 11 auch mehrere lösbare Segmente 55 zugeordnet sein, durch die hindurch der Vordreschtrommel 11 benachbarte Arbeitsorgane 21, 46, 48 zu Montage- und Demonatgezwecken erreichbar sind.

Es liegt im Rahmen der Erfindung, dass das erfindungsgemäße Segment 39 auch an der Dreschtrommel 21 oder weiteren Arbeitsorganen ausgebildet sein kann, um die beschriebenen Effekte zu erzielen. Zudem ist die beschriebene Erfindung nicht auf das dargestellte Ausführungsbeispiel beschränkt, sondern kann an beliebig ausgeführten landwirtschaftlichen Erntemaschinen, wie insbesondere an den Einzugs- und Häckselorganen von Feldhäckslern zur Anwendung kommen, um zwischen den Arbeitsorganen eine Durchtrittsöffnung zu erhalten, die den Zugang zu den Arbeitsorganen verbessert.

### Bezugszeichenliste

- 1: Landwirtschaftliche Arbeitsmaschine
- 2: Mähdrescher
- 3: Schrägförderer
- 4: Hubzylinder
- 5: Achse
- 6: Drehrichtung Schrägförderer
- 7: Fördermechanismus
- 8: Erntegutstrom
- 9: Verkleidung
- 10: Arbeitsorgan
- 11: Vordreschtrommel
- 12: Walzenmantel
- 13: Mitnahmeelemente
- 14: Achsrichtung
- 15: Dresch- und Abscheidekorb
- 16: Gutleitelement
- 17: Förderspalt
- 18: Drehrichtung Vordreschtrommel
- 19: Erntegutstrom
- 20: Arbeitsorgan
- 21: Dreschtrommel
- 22: Achse
- 23: Drehrichtung Dreschtrommel
- 24: Schlagleisten
- 25: Mitnahmeelemente
- 26: Durchgangsspalt
- 27: Dresch- und Abscheidekorb
- 28: Gutleitelement
- 29: Ernteutstrom
- 30: Dreschwerk
- 31: Wendetrommel
- 32: Hordenschüttler
- 33: Zugangsklappe
- 34: Verkleidung
- 35: Scharniere
- 36: Aussparung
- 37: Mantelblech
- 38: Verschlusselement
- 39: Segment
- 40: Montage- und Demontageöffnung
- 41: Zugang
- 42: Versteifungssteg
- 43: Befestigungssteg
- 44: Gewindebohrung
- 45: Schrauben
- 43: Siebbelag
- 46a-c: Siebbelagabschnitte
- 47: Durchtrittsöffnungen
- 48: Rahmen
- 49: Schraubverbindungen
- 50: abgewinkelter Steg
- 51: Pfeilrichtung
- 52: Pfeilrichtung
- 53: Pfeilrichtung
- 54: Siebbelag
- 55: Segment

- A: Teilbereich
- FR: Fahrtrichtung

## Patentansprüche

1. Landwirtschaftliche Erntemaschine zum Aufnehmen, Bearbeiten und Fördern von Erntegut mit zumindest einem ersten um eine Achse umlaufenden Arbeitsorgan und zumindest einem diesem ersten Arbeitsorgan zugeordneten und mit diesem in Wirkverbindung stehenden weiteren Arbeitsorgan,
**dadurch gekennzeichnet,**
**dass** dem wenigstens einen um eine Achse (14, 22) umlaufenden Arbeitsorgan (10, 21) eine von einem lösbaren Segment (39) freigebbare und verschließbare Montage- und Demontageöffnung (40) angeformt ist, wobei die Montage- und Demontageöffnung (40) an dem wenigstens einen ersten Arbeitsorgan (10) einen Zugang (41) zu dem wenigstens einen weiteren Arbeitsorgan (15, 21, 27) ausbildet.

2. Landwirtschaftliche Arbeitsmaschine nach Anspruch 1,
**dadurch gekennzeichnet,**
**dass** sich das wenigstens eine lösbare Segment (39) zumindest über einen Teilbereich (A) der Länge des wenigstens einen umlaufenden Arbeitsorgans (10) entlang der Achse (14, 22) des Arbeitsorgans (10) und zumindest über einen Teilbereich des Querschnitts des Arbeitsorgans (10) erstreckt.

3. Landwirtschaftliche Arbeitsmaschine nach einem oder mehreren der vorhergehenden Ansprüche,
**dadurch gekennzeichnet,**
**dass** das wenigstens eine Arbeitsorgan (10) eine trommelförmig Gestalt aufweist und das dem wenigstens einen Arbeitsorgan (10) angeformte Segment (39) als Trommelsegment (39) ausgeführt ist.

4. Landwirtschaftliche Arbeitsmaschine nach einem oder mehreren der vorhergehenden Ansprüche,
**dadurch gekennzeichnet,**
**dass** das dem wenigstens einen Arbeitsorgan (10) zugeordnete wenigstens eine weitere Arbeitsorgan (15, 27) als zumindest teilweise das wenigstens eine erste Arbeitsorgan (10) umschlingende Gutleitelemente (16) ausgebildet ist.

5. Landwirtschaftliche Erntemaschine nach einem oder mehreren der vorhergehenden
Ansprüche,
**dadurch gekennzeichnet,**
**dass** dem wenigstens einen umlaufenden Arbeitsorgan (10, 11) zumindest ein weiteres umlaufendes Arbeitsorgan (10, 21) zugeordnet ist.

6. Landwirtschaftliche Erntemaschine nach einem oder mehreren der vorhergehenden Ansprüche
**dadurch gekennzeichnet,**
**dass** das wenigstens eine erste umlaufende Arbeitsorgan (10, 11) und wenigstens ein weiteres umlaufendes Arbeitsorgan (10, 21) als Dreschtrommeln (11, 21) ausgebildet sind und wenigstens teilweise von als Dresch- und Abscheidekorb (15, 27) ausgeführten Gutführungselementen (16, 28) umschlungen werden, wobei zumindest einer Dreschtrommel (11,21) eine von einem lösbaren Segment (39) freigebbare und verschließbare Montage- und Demontageöffnung (40) angeformt ist, die einen Zugang (41) zu wenigstens einem der benachbarten Arbeitsorgane (10, 15, 27) freigibt.

7. Landwirtschaftliche Erntemaschine nach einem oder mehreren der Ansprüche 1 bis 5,
**dadurch gekennzeichnet,**
**dass** eine Vielzahl von umlaufenden Arbeitsorganen (10, 11,21) ein Mehrtrommeldreschwerk (30) bilden und wenigstens ein Teil der umlaufenden Arbeitsorgane (10) zumindest teilweise von als Dresch- und Abscheidekorb (15, 27) ausgeführten Gutführungselementen (16,28) umschlungen werden, wobei zumindest einem umlaufenden Arbeitsorgan (10) eine von einem lösbaren Segment (39) freigebbare und verschließbare Montage- und Demontageöffnung (40) angeformt ist, die einen Zugang (41) zu wenigstens einem der benachbarten Arbeitsorgane (10, 15, 27) freigibt.

8. Landwirtschaftliche Erntemaschine nach einem oder mehreren der vorhergehenden Ansprüche,
**dadurch gekennzeichnet,**
**dass** das wenigstens eine Segment (39) dem Arbeitsorgan (10) symmetrisch zu dessen Mitte zugeordnet ist.

9. Landwirtschaftliche Erntemaschine nach einem oder mehreren der vorhergehenden Ansprüche,
**dadurch gekennzeichnet,**
**dass** dem Arbeitsorgan (10) neben dem wenigstens einen Segment (39) zumindest ein weiteres Segment (55) zugeordnet ist.

10. Landwirtschaftliche Erntemaschine nach einem oder mehreren der vorhergehenden Ansprüche,
**dadurch gekennzeichnet,**
**dass** das Arbeitsorgan (10) im Übergangsbereich zwischen Arbeitsorgan (10) und lösbarem Segment (39) und/oder im Bereich des lösbaren Segments (39) Versteifungsstege (42) aufweist.

11. Landwirtschaftliche Erntemaschine nach einem oder mehreren der vorhergehenden Ansprüche,
**dadurch gekennzeichnet,**
**dass** das Arbeitsorgan (10) im Übergangsbereich zwischen Arbeitsorgan (10) und lösbarem Segment (39) und/oder im Bereich des lösbaren Segments (39) Befestigungsstege (43) aufweist.

12. Landwirtschaftliche Erntemaschine nach Anspruch 11,
**dadurch gekennzeichnet,**
**dass** das wenigstens eine Segment (39) mittels Schraubverbindungen (44, 45) mit den Befestigungsstegen (43) des Arbeitsorgans (10) lösbar verbunden ist.

13. Landwirtschaftliche Erntemaschine nach einem oder mehreren der vorhergehenden Ansprüche,
**dadurch gekennzeichnet,**
**dass** das wenigstens eine Segment (39) von einem Mantelblech (37) gebildet wird.

14. Landwirtschaftliche Erntemaschine nach einem oder mehreren der vorhergehenden Ansprüche,
**dadurch gekennzeichnet,**
**dass** der oder die als Dresch- und Abscheidekörbe (15, 27) ausgeführten weiteren Arbeitsorgane (15, 27) Siebbeläge (46, 54) aufnehmen, die in mehrere sich in Achsrichtung (14, 22) des zugeordneten Arbeitsorgans (10) erstreckende Siebbelagabschnitten (46a-c, 54) unterteilt sind.

15. Landwirtschaftliche Erntemaschine nach Anspruch 14,
**dadurch gekennzeichnet,**
**dass** die von dem Segment (39) gebildete Montage- und Demontageöffnung (40) in Achsrichtung (14, 22) des wenigstens einen Arbeitsorgans (10) länger als die in Achsrichtung (14, 22) des wenigstens einen Arbeitsorgans (10) weisende Breite eines Siebbelagabschnitts (46a-c, 54) ist.

## Claims

1. An agricultural harvester for picking up, processing and conveying crop material comprising at least one first working member which rotates about an axis and at least one further working member which is associated with said first working member and which is operatively connected thereto,
**characterised in that**
formed on the at least one working member (10, 21) which rotates about an axis (14, 22) is a mounting and dismantling opening (40) which can be opened and closed by a releasable segment (39), wherein the mounting and dismantling opening (40) on the at least one first working member (10) provides an access (41) to the at least one further working member (15, 21, 27).

2. An agricultural working machine according to claim 1 **characterised in that** the at least one releasable segment (39) extends at least over a portion (A) of the length of the at least one rotating working member (10) along the axis (14, 22) of the working member (10) and at least over a portion of the cross-section of the working member (10).

3. An agricultural working machine according to one or more of the preceding claims **characterised in that** the at least one working member (10) is of a drum-shaped configuration and the segment (39) formed on the at least one working member (10) is in the form of a drum segment (39).

4. An agricultural working machine according to one or more of the preceding claims **characterised in that** the at least one further working member (15, 27) associated with the at least one working member (10) is in the form of material guide elements (16) which at least in part extend around the at least one first working member (10).

5. An agricultural harvester according to one or more of the preceding claims **characterised in that** at least one further rotating working member (10, 21) is associated with the at least one rotating working member (10, 11).

6. An agricultural harvester according to one or more of the preceding claims **characterised in that** the at least one first rotating working member (10, 11) and at least one further rotating working member (10, 21) are in the form of threshing cylinders (11, 21) and are at least partially surrounded by material guide elements (16, 28) which are in the form of a threshing and separating concave (15, 27), wherein formed on at least one threshing cylinder (11,21) is a mounting and dismantling opening (40) which can be opened and closed by a releasable segment (39) and which enables access (41) to at least one of the adjacent working members (10, 15, 27).

7. An agricultural harvester according to one or more of claims 1 to 5 **characterised in that** a plurality of rotating working members (10, 11, 21) form a multicylinder threshing mechanism (30) and at least a part of the rotating working members (10) are at least partially surrounded by material guide elements (16, 28) in the form of a threshing and separating concave (15, 27), wherein formed on at least one rotating working member (10) is a mounting and dismantling opening (40) which can be opened and closed by a releasable segment (39) and which enables access (41) to at least one of the adjacent working members (10, 15, 27).

8. An agricultural harvester according to one or more of the preceding claims **characterised in that** the at least one segment (39) is associated with the working member (10) symmetrically with respect to the centre thereof.

9. An agricultural harvester according to one or more of the preceding claims **characterised in that** besides the at least one segment (39) at least one further segment (55) is associated with the working member (10).

10. An agricultural harvester according to one or more of the preceding claims **characterised in that** the working member (10) has reinforcing limbs (42) in the transitional region between the working member (10) and the releasable segment (39) and/or in the region of the releasable segment (39).

11. An agricultural harvester according to one or more of the preceding claims **characterised in that** the working member (10) has fixing limbs (43) in the transitional region between the working member (10) and the releasable segment (39) and/or in the region of the releasable segment (39).

12. An agricultural harvester according to claim 11 **characterised in that** the at least one segment (39) is connected releasably to the fixing limbs (43) of the working member (10) by means of screw connections (44, 45).

13. An agricultural harvester according to one or more of the preceding claims **characterised in that** the at least one segment (39) is formed by a peripheral casing plate (37).

14. An agricultural harvester according to one or more of the preceding claims **characterised in that** the further working member or members (15, 27) in the form of threshing and separating concaves (15, 27) receive sieve covers (46, 54) which are subdivided into a plurality of sieve cover portions (46a-c, 54) extending in the axial direction (14, 22) of the associated working member (10).

15. An agricultural harvester according to claim 14 **characterised in that** the mounting and dismantling opening (40), formed by the segment (39), is longer in the axial direction (14, 22) of the at least one working member (10) than the width of a sieve cover portion (46a-c, 54), which faces in the axial direction (14, 22) of the at least one working member (10).

## Revendications

1. Machine agricole de récolte pour ramasser, traiter et convoyer du produit à récolter, avec au moins un premier organe de travail tournant autour d'un axe et au moins un organe de travail supplémentaire associé à ce premier organe de travail et en liaison active avec celui-ci, **caractérisée en ce que** dans l'organe de travail (10, 21), au nombre d'au moins un, tournant autour d'un axe (14, 22) est ménagée une ouverture de montage et de démontage (40) découvrable et obturable par un segment amovible (39), l'ouverture de montage et de démontage (40) créant au niveau du premier organe de travail (10), au nombre d'au moins un, un accès (41) à l'organe de travail supplémentaire (15, 21, 27), au nombre d'au moins un.

2. Machine agricole de travail selon la revendication 1, **caractérisée en ce que** le segment amovible (39), au nombre d'au moins un, s'étend au moins sur une zone partielle (A) de la longueur de l'organe de travail tournant (10), au nombre d'au moins un, suivant l'axe (14, 22) de l'organe de travail (10) et au moins sur une zone partielle de la section transversale de l'organe de travail (10).

3. Machine agricole de travail selon une ou plusieurs des revendications précédentes, **caractérisée en ce que** l'organe de travail (10), au nombre d'au moins un, présente une forme de tambour et le segment (39) associé à l'organe de travail (10), au nombre d'au moins un, est conformé en segment de tambour (39).

4. Machine agricole de travail selon une ou plusieurs des revendications précédentes, **caractérisée en ce que** l'organe de travail supplémentaire (15, 27), au nombre d'au moins un, associé à l'organe de travail (10), au nombre d'au moins un, est conformé en élément de guidage de produit récolté (16) entourant au moins partiellement le premier organe de travail (10) au nombre d'au moins un.

5. Machine agricole de récolte selon une ou plusieurs des revendications précédentes, **caractérisée en ce qu'**à l'organe de travail tournant (10, 11), au nombre d'au moins un, est associé au moins un organe de travail tournant supplémentaire (10, 21).

6. Machine agricole de récolte selon une ou plusieurs des revendications précédentes, **caractérisée en ce que** le premier organe de travail tournant (10, 11), au nombre d'au moins un, et au moins un organe de travail tournant supplémentaire (10, 21) sont conformés en batteurs (11, 21) et sont entourés au moins partiellement par des éléments de guidage de produit récolté (16, 28) conformés en contre-batteur/panier-grille (15, 27), dans au moins un batteur (11, 21) étant ménagée une ouverture de montage et de démontage (40) qui peut être découverte et obturée par un segment amovible (39) et qui offre un accès (41) à au moins un des organes de travail voisins (10, 15, 27).

7. Machine agricole de récolte selon une ou plusieurs des revendications 1 à 5, **caractérisée en ce qu'**une pluralité d'organes de travail tournants (10, 11, 21) forme un mécanisme de battage à plusieurs batteurs (30) et au moins une partie des organes de travail tournants (10) est entourée au moins partiellement par des éléments de guidage de produit récolté (16, 28) conformés en contre-batteur/panier-grille (15, 27), dans au moins un organe de travail tournant (10) étant ménagée une ouverture de montage et de démontage (40) qui peut être découverte et obturée par un segment amovible (39) et qui offre un accès (41) à au moins un des organes de travail voisins (10, 15, 27).

8. Machine agricole de récolte selon une ou plusieurs des revendications précédentes, **caractérisée en ce que** le segment (39), au nombre d'au moins un, est associé à l'organe de travail (10) symétriquement au milieu de celui-ci.

9. Machine agricole de récolte selon une ou plusieurs des revendications précédentes, **caractérisée en ce qu'**à l'organe de travail (10) est associé, en plus du segment (39) au nombre d'au moins un, un segment supplémentaire (55).

10. Machine agricole de récolte selon une ou plusieurs des revendications précédentes, **caractérisée en ce que** l'organe de travail (10) comporte, dans la zone de transition entre l'organe de travail (10) et le segment amovible (39) et/ou dans la zone du segment amovible (39), des barrettes de renfort (42).

11. Machine agricole de récolte selon une ou plusieurs des revendications précédentes, **caractérisée en ce que** l'organe de travail (10) comporte, dans la zone de transition entre l'organe de travail (10) et le segment amovible (39) et/ou dans la zone du segment amovible (39), des barrettes de fixation (43) de l'organe de travail (10).

13. Machine agricole de récolte selon une ou plusieurs des revendications précédentes, **caractérisée en ce que** le segment (39), au nombre d'au moins un, est formé par une tôle d'enveloppe (37).

14. Machine agricole de récolte selon une ou plusieurs des revendications, **caractérisée en ce que** le ou les organes de travail supplémentaires (15, 27) conformés en contre-batteurs/paniers-grilles (15, 27) comportent des garnitures de criblage (46, 54) qui sont divisées en plusieurs portions de garnitures de criblage (46a-c, 54) s'étendant dans la direction axiale (14, 22) de l'organe de travail (10) associé.

15. Machine agricole de récolte selon la revendication 14, **caractérisée en ce que** l'ouverture de montage et de démontage (40) formée par le segment (39) est plus grande dans la direction axiale (14, 22) de l'organe de travail (10), au nombre d'au moins un, que la largeur d'une portion de garniture de criblage (46a-c, 54) orientée dans la direction axiale (14, 22) de l'organe de travail (10) au nombre d'au moins un.
